# EUROPEAN PATENT SPECIFICATION

(11) **EP 2 210 918 B1**
(45) Date of publication and mention of the grant of the patent: **14.01.2015**
(21) Application number: 08849844.9
(22) Date of filing: 08.10.2008
(51) Int. Cl.: C08L 101/00, B60R 13/00, C08K 3/30, C08K 5/3435

(54) **RESIN COMPOSITION AND RESIN MOLDED ARTICLE**
HARZZUSAMMENSETZUNG UND FORMARTIKEL AUS HARZ
COMPOSITION DE RÉSINE ET ARTICLE MOULÉ EN RÉSINE

(30) Priority: 15.11.2007 JP 2007296312
(43) Date of publication of application: 28.07.2010
(73) Proprietor: Adeka Corporation, Tokyo 1160012 (JP)
(72) Inventor: MIZOKAWA, Shigeo, Saitama-shi Saitama 336-0022 (JP); NEGISHI, Yoshinori, Saitama-shi Saitama 336-0022 (JP)
(74) Representative: Jones, Helen M.M.
(86) International application number: PCT/JP2008/068293
(87) International publication number: WO 2009/063708

(56) References cited:
- EP-A1- 1 731 508
- WO-A1-2005/082852
- JP-A- 2004 210 987
- JP-A- 2005 048 077
- JP-A- 2005 054 105
- DATABASE WPI Week 200454 Thomson Scientific, London, GB; AN 2004-557459 XP002664154, & JP 2004 210987 A (ASAHI DENKA KOGYO KK) 29 July 2004 (2004-07-29)

## Description

### Technical Field

The present invention relates to a resin composition and a resin molded article, more particularly to a resin composition whose weather resistance is improved by adding zinc sulfide and a hindered amine compound having a specific structure to a resin, and to a resin molded article using the resin composition.

### Background Art

For a use exposed to outdoor radiations such as an automotive exterior material, a long fiber reinforced polyolefin resin and the like containing titanium oxide as a white pigment, have been generally used. However, in case of a long fiber reinforced polyolefin resin, the use of titanium oxide decreases the mechanical strength. As a countermeasure to the problem, the use of zinc sulfide has been proposed (Patent Document 1).

Pursuant to the method, the decrease of the mechanical strength can be suppressed by use of zinc sulfide, however there occurs another problem that the weather resistance is deteriorated significantly. To cope with the problem, a combination of a hindered amine compound and an ultraviolet absorber has been proposed (Patent Document 2). Further, use of a hindered amine compound with the molecular weight of 1,000 or higher has been proposed to improve the weather resistance (Patent Document 3). Further, a resin composition that contains a resin composition containing zinc sulfide, and additionally a conventionally proposed hindered amine compound alone or together with an ultraviolet absorber in combination, has been proposed (Patent Documents 4 and 5).
Patent Document 1: Japanese Patent No. 2813559
Patent Document 2: Japanese Unexamined Patent Application Publication No. 9-183869
Patent Document 3: Japanese Unexamined Patent Application Publication No. 2001-192468
Patent Document 4: Japanese Unexamined Patent Application Publication No. 2004-210987
Patent Document 4: Japanese Unexamined Patent Application Publication No. 2005-048077

### Disclosure of the Invention

### Problems to be solved by the Invention

However, even with the use of a resin composition that contains a resin composition containing zinc sulfide, and additionally a conventionally proposed hindered amine compound alone or together with an ultraviolet absorber in combination as described in Patent Documents 2 to 5, the improvement activity for the weather resistance has not been adequate. Consequently, there remains a pending issue of improvement of the weather resistance of a resin molded article containing zinc sulfide as an effective white pigment.

Under such circumstances, an object of the present invention is to provide a resin composition containing zinc sulfide exhibiting superior weather resistance, and a resin molded article utilizing the resin composition.

### Means for Solving the Problems

The present inventors have intensively studied to meet the object, and have finally found that by adding a combination of zinc sulfide and a hindered amine compound with a specific structure to a resin, a resin composition and a resin molded article exhibiting superior weather resistance can be yielded, thereby completing the present invention.

A resin composition according to the present invention comprises, with respect to 100 parts by mass of the resin, 0.1 to 20 parts by mass of (A) zinc sulfide and 0.01 to 20 parts by mass of a (B) hindered amine compound having a structure represented by the following general formula (1): 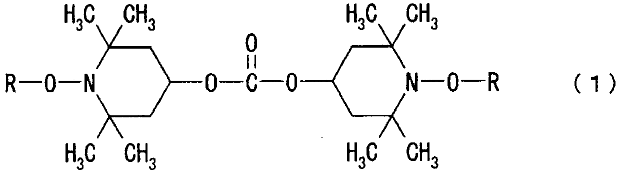 wherein R is independently a C₁ to C₁₈ alkyl group, a C₁ to C₁₈ acyl group or a C₅ to C₈ cycloalkyl group, each group being allowed to be substituted by a hydroxy group.

Further, a resin molded article according to the present invention is molded with the resin composition and having improved weather resistance.

Further, the molded article according to the present invention is preferably used for an automotive exterior material.

### Advantages of the Invention

According to the present invention, it has become possible to provide a resin composition containing zinc sulfide, exhibiting superior weather resistance, and a resin molded article utilizing the resin composition.

### Best Mode for Carrying Out the Invention

The present invention will be described in more details below.

Examples of a resin to be used in the present invention include in the form of a thermoplastic resin: polyolefins or copolymers thereof, including α-olefin polymers, such as polypropylene, high density polyethylene, low density polyethylene, linear low density polyethylene, polybutene-1 and poly-4-methylpentene-1, ethylene-vinyl acetate copolymers and ethylene-propylene copolymers; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic acid ester copolymers, vinyl chloride-maleic acid ester copolymers, and vinyl chloride-cyclohexyl maleimide copolymers; petroleum resins; coumarone resins; polystyrene; copolymers of either or both of styrene and α-methylstyrene with other monomer(s), (e.g. maleic anhydride, phenylmaleimide, methyl methacrylate, butadiene, and acrylonitrile), such as AS resins, ABS resins, MBS resins, and heat resistant ABS resins; polymethyl methacrylate; acrylic resin; polyvinyl acetate; polyvinyl alcohol; polyvinyl formal; polyvinyl butyral; linear polyesters, such as polyethylene terephthalate and polytetramethylene terephthalate; polyamides, such as polycaprolactam and polyhexamethylene adipamide; polycarbonate; branched polycarbonate; polyacetal; polyphenylene oxide; polyphenylene sulfide; polyurethane; liquid crystal polymers; biodegradable resins, such as an aliphatic polyester from aliphatic dicarboxylic acid, aliphatic diol, aliphatic hydroxycarboxylic acid, or cyclic derivatives thereof, and a reaction product thereof with diisocyanate increasing the molecular weight; and cellulosic resins; and mixtures thereof; as well as in the form of a thermosetting resin: phenol resins, urea resins, melamine resins, epoxy resins, and unsaturated polyester resins. Furthermore, elastomers, such as isoprene rubbers, butadiene rubbers, acrylonitrile-butadiene copolymer rubbers, and styrene-butadiene copolymer rubbers, may be used. The resins may be recycled resins. Among the afore-listed resins, polyolefin resins, such as polyethylene, polypropylene, and ethylene-propylene copolymer resins, are especially preferable.

The resins can be used irrespective of the specific gravity, average molecular weight, melt viscosity, monomer composition, insoluble rate in a solvent, existence or nonexistence or type of stereoregularity, shape and size at the completion of the polymerization, type of a catalyst used for the polymerization, existence or nonexistence or method of a residual catalyst deactivation or removal treatment, and existence or nonexistence, type, or concentration of a residual metal or acid component originated from a catalyst in the resin.

There is no particular restriction on the quality, particle size, or production process of (A) zinc sulfide to be used according to the present invention, and those known as a resin additive white pigment can be utilized.

Examples of a C₁ to C₁₈ alkyl group represented by R of a (B) hindered amine compound represented by the general formula (1) to be used in the present invention include methyl, ethyl, propyl, isopropyl, n-butyl, sec-butyl, tert-butyl, pentyl, hexyl, heptyl, octyl, 2-ethylhexyl, nonyl, isononyl, decyl, undecyl, dodecyl, tridecyl, tetradecyl, pentadecyl, hexadecyl, heptadecyl and octadecyl.

Examples of a C₁ to C₁₈ alkyl group substituted by a hydroxy group represented by R in the general formula (1) to be used in the present invention include groups that correspond to the above-exemplified alkyl groups, such as 2-hydroxyethyl, 2-hydroxypropyl, 3-hydroxypropyl and 2-hydroxy-2-methylpropyl.

Examples of a C₁ to C₁₈ acyl group represented by R in the general formula (1) to be used according to the present invention include acetyl, propanoyl, butanoyl, pentanoyl, hexanoyl, heptanoyl, octanoyl, decanoyl, undecanoyl, dodecanoyl, tridecanoyl, tetradecanoyl, pentadecanoyl, hexadecanoyl, heptadecanoyl and octadecanoyl.

Examples of a C₅ to C₈ cycloalkyl group represented by R in the general formula (1) to be used according to the present invention include cyclopentyl, cyclohexyl, cycloheptyl and cyclooctyl.

Specific examples of a hindered amine compound represented by the general formula (1) according to the present invention include the following compounds No. 1 to 6, provided, however, that the present invention should not be construed to be limited by the following compounds in any manner.

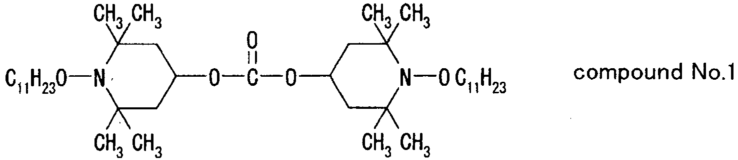

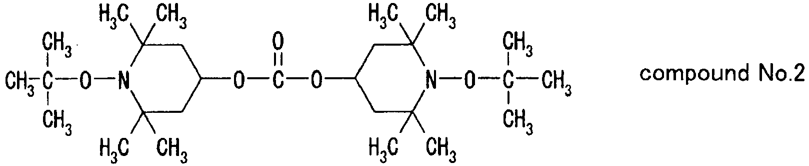

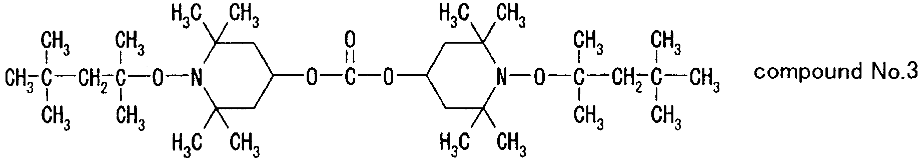

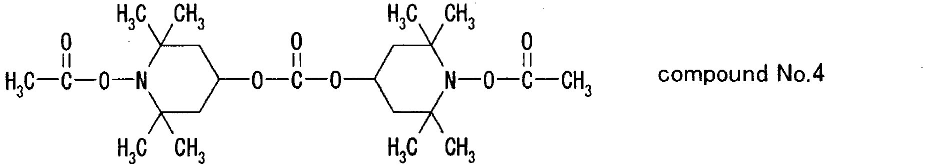

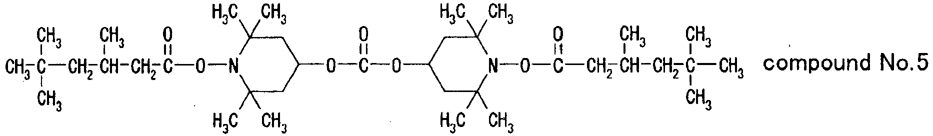

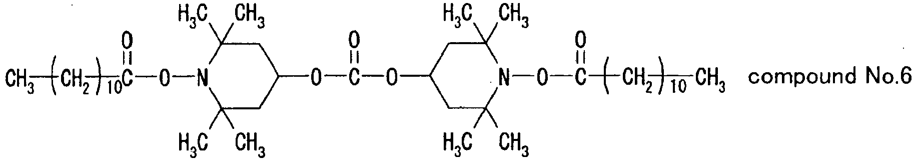

Among the exemplified compounds, the compound No. 1 is preferable in terms of especially high weather resistance improvement activity.

A resin composition according to the present invention is prepared by adding 0.1 to 20 parts by mass, preferably 0.5 to 10 parts by mass, and more preferably 1 to 5 parts by mass of zinc sulfide as a white pigment to 100 parts by mass of a resin, and additionally 0.01 to 20 parts by mass, preferably 0.05 to 10 parts by mass, and more preferably 0.1 to 5 parts by mass of a hindered amine compound. In case the content of zinc sulfide is less than 0.1 part by mass, it is not effective as a white pigment, while in case it is beyond 20 parts by mass, the mechanical strength of a resin molded article is deteriorated. Further, in case the content of a hindered amine compound is less than 0.01 part by mass, the stabilizing activity is not adequate, while in case more than 20 parts by mass are used, the physical properties of the resin may be deteriorated or the appearance of a resin molded article may be compromised by blooming.

A resin composition according to the present invention may contain in combination, as necessary a phenolic antioxidant, a phosphorus-containing antioxidant, a sulfur-containing antioxidant, a hydroxyamine derivative antioxidant, an ultraviolet absorber, another hindered amine compound, a nucleating agent, a fire retardant, a fire retardant aid, a processing aid, another pigment, a filler, a plasticizer, a metallic soap, hydrotalcites, and an antistatic agent.

Examples of the phenolic antioxidant include 2,6-di-tert-butyl-p-cresol, 2,6-diphenyl-4-octadecyloxyphenol, 2,4-di-tert-butyl-6-octylthiomethylphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzylthioacetate, thiodiethylene bis[(3,5-di-tert-butyl-4-hydroxyphenyl) propionate], 4,4'-thio-bis(6-tert-butyl-m-cresol), 2-octylthio-4,6-di(3,5-di-tert-butyl-4-hydroxyphenoxy)-s-triazine, 2,2'-methylene-bis(4-methyl-6-tert-butylphenol), bis[3,3-bis(4-hydroxy-3-tert-butylphenyl)butyric acid]glycol ester, 4,4'-butylidene-bis(2,6-di-tert-butylphenol), 4,4'-butylidene-bis(6-tert-butyl-3-methylphenol), 2,2'-ethylidene-bis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methyl benzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyl-oxyethyl]isocyanurate, tetrakis[methylene-3-(3',5'-di-tert-butyl-4'-hydroxyphenyl)propionate]methane, 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8, 10-tetraoxaspiro[5.5]undecane, triethylene glycol bis[β-(3-tert-butyl-4-hydroxy-5-methylphenyl)propionate and tocopherol.

Examples of the phosphorus-containing antioxidant include triphenyl phosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono- and di-nonylphenyl)phosphite, diphenyl acid phosphite, 2,2'-methylene bis(4,6-di-tert-butylphenyl)octyl phosphite, diphenyl decyl phosphite, diphenyl octyl phosphite, di(nonylphenyl)pentaerythritol diphosphite, phenyldiisodecyl phosphite, tributyl phosphite, tris(2-ethylhexyl) phosphite, tridecylphosphite, trilauryl phosphite, dibutyl acid phosphite, dilauryl acid phosphite, trilauryl trithiophosphite, bis(neopentyl glycol)-1,4-cyclohexane dimethyl diphosphite, bis(2,4-di-tert-butylphenyl)pentaerythritol diphosphite, bis(2,5-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, distearyl pentaerythritol diphosphite, tetra(C12-C15 mixed alkyl)-4,4'-isopropylidene diphenyl phosphite, bis[2,2'-methylenebis(4,6-diamylphenyl)]-isopropylidene diphenyl phosphite, tetra(tridecyl)-4,4'-butylidene-bis(2-tert-butyl-5-methylphenol)diphosphite, hexa(tridecyl)-1,1,3-tris(2-methyl-5-tert-butyl-4-hydroxyphenyl)butane triphosphite, tetrakis(2,4-di-tert-butylphenyl)biphenylene diphosphonite, tris(2-[(2,4,7,9-tetrakis-tert-butyldibenzo[d,f][1,3,2] dioxaphosphepin-6-yl)oxy]ethyl)amine, 2-(1,1-dimethylethyl)-6-methyl-4-[3-[[2,4,8,10-tetrakis(1,1-dimethylethyl)dibenzo[d,f][1,3,2]dioxaphosphepin-6-yl]oxy] propyl]phenol, 9,10-dihydro-9-oxa-10-phosphaphenanthrene-10-oxide, and 2-butyl-2-ethylpropanediol-2,4,6-tri-tertbutylphenol monophosphite.

Examples of the sulfur-containing antioxidant include dialkyl thiodipropionates, such as dilauryl, dimyristyl, myristyl stearyl, and distearyl esters of thiodipropionic acid; and esters of polyols and β-alkylmercaptopropionic acids, such as pentaerythritol tetra(β-dodecyl mercaptopropionate).

Examples of the hydroxyamine derivative antioxidant include dilaurylhydroxyamine, dimyristylhydroxyamine, dipalmitylhydroxyamine, distearylhydroxyamine, dibenzylhydroxyamine and dicyclohexylhydroxyamine.

Examples of the ultraviolet absorber include 2-hydroxy benzophenones, such as 2,4-dihydroxy benzophenone, 2-hydroxy-4-methoxy benzophenone, 2-hydroxy-4-octoxy benzophenone, 5,5'-methylene bis(2-hydroxy-4-methoxy benzophenone); 2-(2'-hydroxyphenyl)benzotriazoles, such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2-(2'-hydroxy-3'-tert-butyl-5'-carboxyphenyl)benzotriazole; benzoates, such as phenyl salicylate, resorcinol monobenzoate, 2,4-di-tert-butylphenyl-3,5-di-tert-butyl-4- hydroxybenzoate, 2,4-di-tert-amylphenyl-3,5-di-tert-butyl- 4-hydroxybenzoate, and hexadecyl-3,5-di-tert-butyl-4- hydroxybenzoate; substituted oxanilides, such as 2-ethyl-2'-ethoxyoxanilide, and 2-ethoxy-4'-dodecyloxanilide; cyanoacrylates, such as ethyl-α-cyano-β,β-diphenyl acrylate, and methyl-2-cyano-3-methyl-3-(p-methoxyphenyl) acrylate; and triaryl triazines, such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine.

Examples of another hindered amine compound as described above include 1-oxy-2,2,6,6-tetramethyl-4-piperidinol, 2,2,6,6-tetramethyl-4-piperidyl stearate, 1,2,2,6,6-pentamethyl-4-piperidyl stearate, 1-(2-hydroxy-2-methyl) propyloxy-2,2,6,6-tetramethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, bis(1-octoxy-2,2,6,6-tetramethyl-4-piperidyl) sebacate, 1,2,2,6,6-pentamethyl-4-piperidyl methyl methacrylate, 2,2,6,6-tetramethyl-4-piperidyl methyl methacrylate, tetrakis(2,2,6,6-tetramethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl) malonate, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/ dibromoethane polycondensate, a 1,6-bis(2,2,6,6-tetramethyl-4-piperidylamino)hexane/2,4-dichloro-6-morpholino-s-triazine polycondensate, a 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazin-6-yl]-1, 5,8,12-tetraazadodecane, 1,5,8,12-tetrakis[2,4-bis(N-butyl-N-(1,2,2,6,6-pentamethyl-4-piperidyl)amino)-s-triazin-6-yl]-1, 5,8,12-tetraazadodecane, 1,6,11-tris[2,4-bis(N-butyl-N-(2,2,6,6-tetramethyl-4-piperidyl)amino)-s-triazin-6-ylamino] undecane, 1,6,11-tris[2,4-bis(N-butyl-N-(1,2,2,6,6-pentamethyl-4- piperidyl)amino)-s-triazin-6-ylamino]undecane, 3,9-bis[1,1-dimethyl-2-[tris(2,2,6,6-tetramethyl-4-piperidyl-oxycarbonyloxy)butylcarbonyloxy]ethyl]-2,4,8,10-tetraoxaspiro[5.5]undecane, and 3,9-bis[1,1-dimethyl-2-[tris (1,2,2,6,6-pentamethyl-4-piperidyl-oxycarbonyloxy) butylcarbonyloxy]ethyl]-2,4,8,10-tetraoxaspiro[5.5]undecane.

In case any of the above described antioxidants from the phenolic antioxidant to another hindered amine compound is used, the amount added should be 0.001 to 10 parts by mass, more preferably 0.05 to 5 parts by mass with respect to 100 parts by mass of a resin in order to educe adequate activity.

Examples of the nucleating agent include metal salts of an aromatic carboxylic acid, such as aluminum p-tert-butyl benzoate, and sodium benzoate; metal salts of an acidic phosphate ester, such as sodium bis(2,4-di-tert-butylphenyl)phosphate, lithium bis(2,4-di-tert-butylphenyl)phosphate, and sodium 2,2'-methylene-bis(4,6-di-tert-butyl phenyl)phosphate; and polyhydric alcohol derivatives, such as dibenzylidene sorbitol, and bis(methylbenzylidene)sorbitol.

Examples of the fire retardant include halogen type fire retardants such as decabromodiphenyl ether; phosphorus type fire retardants based on inorganic phosphorus compounds, such as red phosphorus and melamine phosphate, and phosphate compounds, such as triphenyl phosphate, a resorcinol / phenol / phosphoric acid condensate, and a bisphenol A / 2,6-xylenol / phosphoric acid condensate; inorganic fire retardants, such as magnesium hydroxide, and aluminium hydroxide; and nitrogen-containing compounds, such as melamine cyanurate. The fire retardant should preferably be used in combination with a fire retardant aid, such as antimony oxide and zirconium oxide, or a drip-preventing agent, such as a fluorine-contained resin, and a silicone resin.

The pigment may be organic as well as inorganic, and examples thereof include black pigments, such as carbon black; green pigments, such as chromium oxide, chrome green, zinc green, chlorinated copper phthalocyanine green, phthalocyanine green, naphthol green, and malachite green lake; blue pigments, such as ultramarine, iron blue, copper phthalocyanine blue, cobalt blue, phthalocyanine blue, fast sky blue, and indanthrene blue; red pigments, such as red lead, red iron oxide, basic zinc chromate, chrome vermilion, cadmium red, rose red, brilliant carmine, brilliant scarlet, quinacridone red, lithol red, vermilion, thioindigo red, and mingamiya red; and yellow pigments, such as chrome yellow, zinc yellow, yellow iron oxide, titan yellow, fast yellow, hansa yellow, auramine lake, benzidine yellow, and indanthrene yellow.

As the filler are used glass fibers, carbon fibers, Kevlar fibers, talc, silica, calcium carbonate, and a mixture thereof. These reinforcing fibers may be long fibers as well as short fibers. In case long fiber glass fibers are used, a resin composition according to the present invention is especially suitable, because it does not break glass fibers. The surfaces of the fillers should preferably be treated to improve the affinity with a resin. The content of the filler is 5 to 200 parts by mass and preferably 10 to 100 parts by mass with respect to 100 parts by mass of a resin.

As the metallic soap, are used salts between a metal, such as magnesium, calcium, aluminium, and zinc, and a saturated or unsaturated fatty acid, such as lauric acid, myristic acid, palmitic acid, stearic acid, behenic acid, and oleic acid. The soap can be used irrespective of the water content, melting point, particle size, composition of the fatty acids, selection of the production process between a metathetical process by a reaction of an alkali metal salt of a fatty acid with a metal oxide or hydroxide, and a direct process by a neutralization reaction of a fatty acid with a metal oxide or hydroxide in the presence or absence of a solvent, or whether either of the fatty acid or the metal is in excess.

As the hydrotalcites, both natural products and synthetic products can be used, and products which are modified by an alkali metal such as lithium, or which carbonate anions are partly replaced with perchloric acid, can be also used. Especially, the product having a composition represented by the following general formula (3) is preferable:

ZnxMgyAl₂(OH)₂(x+y+2)CO₃·nH₂O (3)

wherein x is 0 to 3, y is 1 to 6, x+y is 4 to 6, and n is 0 to 10. The product can be used irrespective of the existence or nonexistence of crystal water or surface treatment. Although there is no particular restriction on the particle size, smaller size is preferable insofar as the properties of the hydrotalcite should not be lost. If the particle size is large, dispersibility becomes inadequate to decrease stabilizing activity, and the physical properties of a resulted product resin composition, such as mechanical strengths and transparency, are compromised.

For the respective ingredients, the contents and qualities thereof are selected appropriately in accordance with the resin types, process conditions and end uses. Addition of the ingredients into a resin may be carried out according to a conventional process, such as a process in which each ingredient is mixed independently into the resin by, for example, a Henschel mixer and supplied to a processing machine; a process in which ingredients other than the resin are mixed preliminarily in a given combination, formed into powder or granule and added to the resin; a process in which master pellets containing high concentration ingredients in a resin are added to the resin; and a process in which ingredients are fed to the resin through a feeding port different from the port for the resin using an extruder having a plurality of feeding ports.

A resin molded article according to the present invention is molded from the resin composition and has improved weather resistance. There is no particular restriction on a processing method for the resin composition, and an appropriate known processing method may be selected depending on a resin used, existence or nonexistence of a filler, or the like. Examples thereof include injection molding, extrusion molding, coextrusion molding, blow molding, press forming, cast molding and roll forming.

Although there is no particular restriction on the use of a resin molded article according to the present invention, it can be used for general interior/exterior materials, preferably for interior/exterior materials of transport vehicle and building materials such as a window frame, and further preferably for the use exposed to outdoor radiation, such as automotive interior/exterior materials to be subjected to severe environments, and especially preferably for automotive exterior materials. Examples of automotive interior/exterior materials include exterior materials for a bumper, a spoiler, a side visor, a cowl vent grille, a radiator grille, a side molding and a rear panel garnish, and interior materials for an instrument panel, a ceiling, a door, a seat and a luggage room.

### Examples

The present invention will be described in more detail by way of examples thereof, provided that the present invention should not be construed to be limited by the examples.

### [Examples 1 and 2, Comparative Examples 1 to 4]

100 parts by mass of a polypropylene resin copolymerized with ethylene (MFR = 30, density = 0.90 g/cm³, flexural modulus = 1,700MPa), 2.0 parts by mass of zinc sulfide, 0.1 part by mass of tetrakis[3-(3,5-di-tert-butyl-4-hydroxyphenylpropionyl) oxymethyl]methane, 0.1 part by mass of tris(2,4-di-tert-butylphenyl)phosphite, 0.05 part by mass of calcium stearate, and light stabilizers as set forth in the Table 1 (a hindered amine compound and an ultraviolet absorber, the composition being expressed in Table 1 in the unit of part by mass) were extruded at 230°C to pellets. The yielded pellets were injection-molded at 230°C to 2 mm-thick test pieces.

The weather resistance of a test piece was evaluated by means of the time to cracking (hr), the residual rate of gloss (%) and the color difference (ΔE) using a Sunshine Weather Meter (by Suga Test Instruments Co., Ltd., black panel temperature 63°C, with water spraying).

The gloss (unitless) was measured by Gloss Meter, Model TC-108D (by Tokyo Denshoku Co., Ltd.). The obtained results are shown together in the following Table 1.

### [Comparative Example 5]

According to the composition set forth in the following Table 1, the processing, preparation of the test pieces, and evaluation of weather resistance were conducted in the same manner as the Comparative Examples 1 to 4, except that a light stabilizer was not added. The results are shown together in Table 1.

**[Table 1]**

| | | | Example | | Comparative Example | | | | |
|---|---|---|---|---|---|---|---|---|---|
| | | | 1 | 2 | 1 | 2 | 3 | 4 | 5 |
| Light stabilizer | Compound No.1^{*1} | | 0.50 | 1.00 | - | - | - | - | - |
| | Comparative Compound 1^{*2} | | - | - | 1.00 | - | - | 0.75 | - |
| | Comparative Compound 2^{*3} | | - | - | - | 1.00 | - | - | - |
| | Comparative Compound 3^{*4} | | - | - | - | - | 1.00 | - | - |
| | Comparative Compound 4^{*5} | | - | - | - | - | - | 0.25 | - |
| Evaluation of weather resistance | Time to cracking (hr) | | 1080 | 1320 | 480 | 360 | 840 | 960 | 360 |
| | Residual rate of gloss (%) | 300hr | 95 | 97 | 53 | 42 | 88 | 100 | 30 |
| | | 600hr | 85 | 91 | - | - | 72 | 93 | - |
| | | 900hr | 81 | 87 | - | - | - | 67 | - |
| | | 1020hr | 65 | 81 | - | - | - | - | - |
| | Color difference (ΔE) | 300hr | 0.19 | 0.16 | 8.86 | 9.02 | 0.22 | 0.10 | 10.36 |
| | | 600hr | 0.45 | 0.38 | - | - | 1.07 | 0.27 | - |
| | | 900hr | 0.87 | 0.59 | - | - | - | 1.20 | - |

*1: Compound No. 1 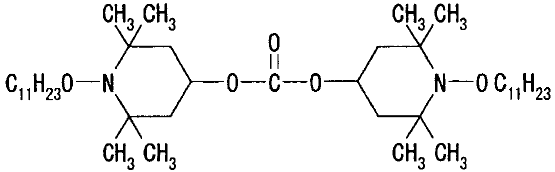 *2: Comparative Compound 1 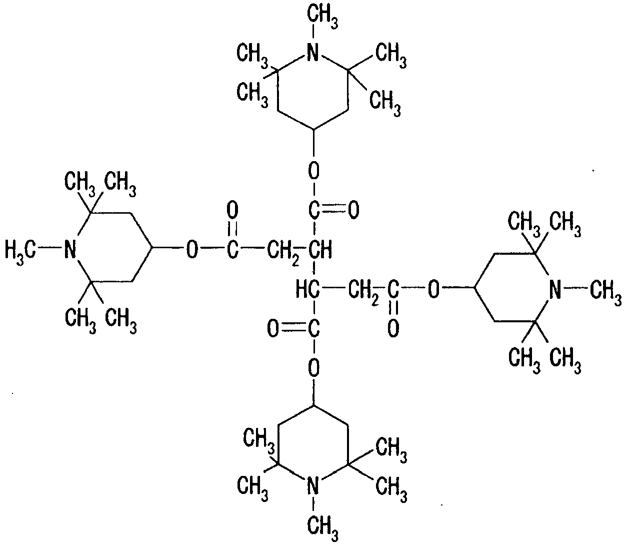 *3: Comparative Compound 2 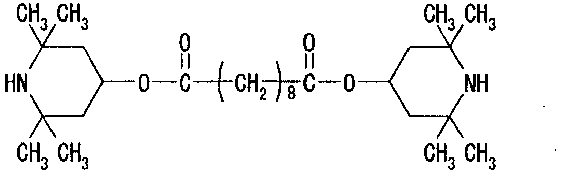 *4: Comparative Compound 3 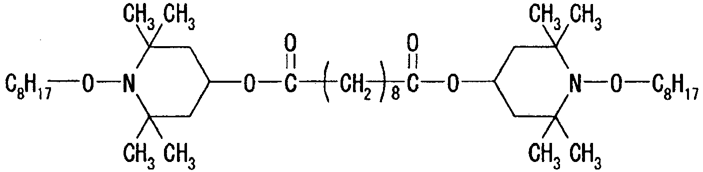 *4: Comparative Compound 4

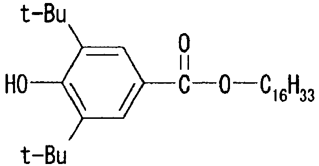

### [Reference Examples 1 and 2]

Substituting titanium oxide for the zinc sulfide in the Examples, the processing and the evaluation were conducted as follows.

100 parts by mass of a polypropylene resin copolymerized with ethylene (MFR = 30, density = 0.90 g/cm³, flexural modulus = 1,700 MPa), 1.0 part by mass of titanium oxide, 0.05 part by mass of tetrakis[3-(3,5-di-tert-butyl-4-hydroxyphenylpropionyl)oxymethyl]methane, 0.05 part by mass of tris(2,4-di-tert-butylphenyl)phosphite, 0.1 part by mass of calcium stearate, and light stabilizers as set forth in the Table 2 (a hindered amine compound, the composition being expressed in Table 2 in the unit of part by mass) were extruded at 250°C to pellets. The yielded pellets were injection-molded at 250°C to 2 mm-thick test pieces.

The weather resistance of a test piece was evaluated using the Sunshine Weather Meter (black panel temperature 83°C, with water spraying) by means of the time to cracking (hr), and the Y. I. (Yellow Index, using a color difference meter by Suga Test Instruments Co., Ltd.). The results are shown together in Table 2.

### [Reference Example 3]

According to the composition set forth in the following Table 2, the processing, preparation of the test pieces, and evaluation of weather resistance were conducted in the same manner as the Reference Examples 1 and 2, but a light stabilizer was not added. The results are shown together in Table 2.

**[Table 2]**

| | | | Reference Example | | |
|---|---|---|---|---|---|
| | | | 1 | 2 | 3 |
| Light stabilizer | Comparative Compound 1^{*2} | | 0.15 | - | - |
| | Comparative Compound 2^{*3} | | - | 0.15 | - |
| Evaluation of weather resistance | Time to cracking (hr) | | 960 | 720 | 240 |
| | Y.I | (Initial value) | 6.4 | 6.0 | 8.4 |
| | | 480hr | 5.5 | 4.9 | - |
| | | 600hr | 5.9 | 4.9 | - |
| | | 720hr | 6.1 | 5.3 | - |

As obvious from the results of the Reference Examples in Table 2, the zinc sulfide system gives specifically inferior weather resistance to a commonly used titanium oxide system.

It is obvious from the results shown in Table 1, that the weather resistance in Examples 1 and 2, in which a hindered amine compound according to the present invention was used, was significantly improved compared to Comparative Examples 1 to 3, in which a conventional hindered amine compound was used. Further, compared to a combination system of a hindered amine and a benzoate compound (Comparative Example 4), which has been known as effective, the system using a hindered amine compound according to the present invention at the same content level (Example 2) exhibited significantly strong improvement activity on weather resistance. Furthermore, taking into comparison Example 1, which contains the stabilizer only at a 1/2 level as Comparative Examples 1 to 4, Example 1 could attain even better weather resistance.

## Claims

1. A resin composition comprising, with respect to 100 parts by mass of the resin, 0.1 to 20 parts by mass of (A) zinc sulfide and 0.01 to 20 parts by mass of a (B) hindered amine compound having a structure represented by the following general formula (1): 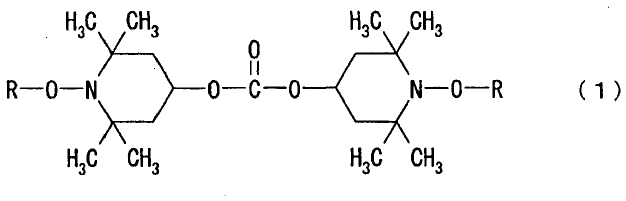 wherein R is independently a C1 to C18 alkyl group, a C1 to C18 acyl group or a C5 to C8 cycloalkyl group, each group being allowed to be substituted by a hydroxy group.

2. The resin composition according to claim 1, wherein the (B) hindered amine compound having a structure represented by the general formula (1) is:

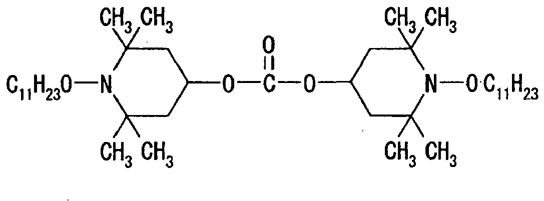

3. The resin composition according to claim 1 comprising 1 to 5 parts by mass of the (A) zinc sulfide, with respect to 100 parts by mass of the resin, and 0.1 to 5 parts by mass of the (B) hindered amine compound having a structure represented by the general formula (1).

4. The resin composition according to any preceding claim, wherein the resin is a polyolefin resin.

5. The resin composition according to any preceding claimfurther comprising one or more additives selected from the group consisting of a phenolic antioxidant, a phosphorus-containing antioxidant, a sulfur-containing antioxidant, a hydroxyamine derivative antioxidant, an ultraviolet absorber, another hindered amine compound, a nucleating agent, a fire retardant, a fire retardant aid, a processing aid, another pigment, a filler, a plasticizer, a metallic soap, hydrotalcites, and an antistatic agent.

6. A method of preparing the resin composition according to any preceding claim, comprising the steps of adding 0.1 to 20 parts by mass of zinc sulfide to 100 parts by mass of a resin, and additionally 0.01 to 20 parts by mass of a hindered amine compound.

7. A resin molded article which is molded with the resin composition according to any preceding claim.

8. The resin molded article according to claim 7, wherein said molding is carried out by injection molding, extrusion molding, coextrusion molding, blow molding, press forming, cast molding or roll forming.

9. The resin molded article according to claim 7 or claim 8 wherein the resin molded article is an automotive exterior material

10. Use of zinc sulfide and a hindered amine compound having a structure represented by the general formula (1) to improve weather resistance of the resin composition according to any claims 1 to 5 or the resin molded article according to any of claims 7 to 9.

## Patentansprüche

1. Eine Harzzusammensetzung bestehend, hinsichtlich von 100 Masseanteilen des Harzes, aus 0,1 bis 20 Massenanteilen aus (A) Zinksulfid und 0,01 bis 20 Massenanteilen aus (B) einer gehinderten Aminverbindung mit einer Struktur, die durch die folgende Formel (1) repräsentiert wird: 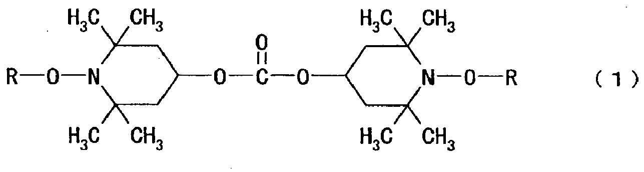 wobei R unabhängig eine C1- bis C18- Alkylgruppe, eine C1- bis C18-Arylgruppe oder eine C5-bis C8-Cycloalkylgruppe ist, wobei jede Gruppe durch eine Hydroxygruppe substituiert werden kann.

2. Die Harzzusammensetzung entsprechend Anspruch 1, wobei die (B) gehinderte Aminverbindung eine Struktur hat, die durch die allgemeine Formel (1) repräsentiert wird, folgende ist:

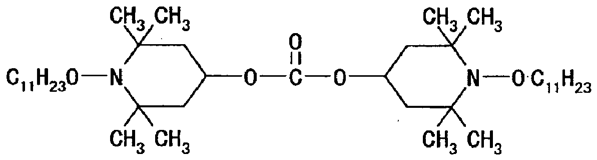

3. Die Harzzusammensetzung entsprechend Anspruch 1 bestehend, hinsichtlich von 100 Massenanteilen des Harzes, aus 1 bis 5 Massenanteilen des (A) Zinksulfids und 0,1 bis 5 Massenanteilen der (B) gehinderten Aminverbindung mit einer durch die allgemeine Formel (1) repräsentierten Struktur.

4. Die Harzzusammensetzung entsprechend einem der vorhergehenden Ansprüche, wobei das Harz ein Polyolefinharz ist.

5. Die Harzzusammensetzung entsprechend einem der vorhergehenden Ansprüche, die zudem eine oder mehrere Zusatzstoffe umfasst, der/die aus der Gruppe bestehend aus einem phenolischen Oxidans, einem phosphorhaltigen Antioxidans, einem von Hydroxyamin abgeleiteten Antioxidans, einem UV-Absorber, einer anderen gehinderten Aminverbindung, einem Nukleierungsmittel, einem feuerhemmenden Mittel, einem feuerhemmenden Hilfsstoff, einem Verarbeitungshilfsstoff, einem anderen Pigment, einem Füllstoff, einem Weichmacher, einer Metallseife, Hydrotalkiten und einem Antistatikum ausgewählt wird/werden.

6. Ein Verfahren zur Vorbereitung der Harzzusammensetzung entsprechend einem der vorhergehenden Ansprüche bestehen aus den schritten der Zugabe von 0,1 bis 20 Massenanteilen an Zinksulfid zu 100 Massenanteilen eines Harzes sowie zusätzlich 0,01 bis 20 Massenanteilen einer gehinderten Aminverbindung.

7. Ein Formartikel aus Harz, der mit der Harzzusammensetzung entsprechend einem der vorhergehenden Ansprüche geformt wird.

8. Der Formartikel aus Harz entsprechend Anspruch 7, wobei die genannte Formbildung durch Spritzguss, Extrusion, Koextrusion, Blasformen, Formpressen, Druckguss oder Profilformen durchgeführt wird.

9. Der Formartikel aus Harz entsprechend Anspruch 7 oder Anspruch 8, wobei der Formartikel aus Harz ein externes Kraftfahrzeugmaterial ist.

10. Die Verwendung von Zinksulfid und einer gehinderten Aminverbindung mit einer durch die allgemeine Formel (1) repräsentierten Struktur zur Verbesserung der Witterungsbeständigkeit der Harzzusammensetzung entsprechend einem Ansprüche 1 bis 5 oder des Formartikels aus Harz entsprechend einem der Ansprüche 7 bis 9.

## Revendications

1. Composition de résine comprenant, par rapport à 100 parties en masse de résine, 0,1 à 20 parties en masse de (A) sulfure de zinc et 0,01 à 20 parties en masse d'un (B) composé d'amine à empêchement stérique ayant une structure représentée par la formule générale suivante (1 ) : 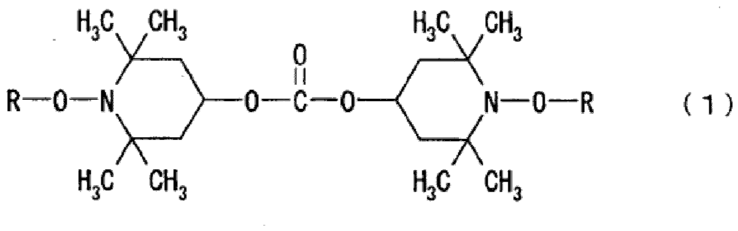 dans laquelle R représente indépendamment un groupe alkyle en C1 à C18, un groupe acyle en C1 à C18 ou un groupe cycloalkyle en C5 à C8, chaque groupe pouvant être substitué par un groupe hydroxy.

2. Composition de résine selon la revendication 1, dans laquelle le (B) composé d'amine à empêchement stérique (B) ayant une structure représentée par la formule générale (1) est :

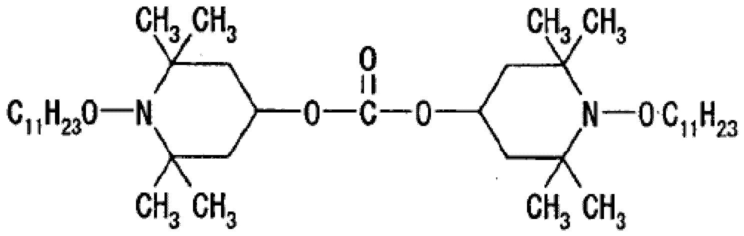

3. Composition de résine selon la revendication 1 comprenant 1 à 5 parties en masse du (A) sulfure de zinc, par rapport à 100 parties en masse de la résine et 0,1 à 5 parties en masse du (B) composé d'amine à empêchement stérique ayant une structure représentée par la formule générale (1).

4. Composition de résine selon l'une quelconque des revendications précédentes, dans laquelle la résine est une résine de polyoléfine.

5. Composition de résine selon l'une quelconque des revendications précédentes, comprenant en outre un ou plusieurs additifs sélectionné(s) parmi le groupe constitué d'un antioxydant phénolique, d'un antioxydant contenant du phosphore, d'un antioxydant contenant du souffre, d'un antioxydant dérivé de l'hydroxyamine, d'un absorbeur de rayonnement ultraviolet, d'un autre composé d'amine à empêchement stérique, d'un agent de nucléation, d'un retardant de flamme, d'un traitement retardateur de flamme, d'un adjuvant de fabrication, d'un autre pigment, d'une charge, d'un plastifiant, d'un savon métallique, d'hydrotalcites et d'un agent antistatique.

6. Procédé de préparation d'une composition de résine selon l'une quelconque des revendications précédentes, comprenant les étapes d'ajout de 0,1 à 20 parties en masse de sulfure de zinc à 100 parties en masse d'une résine et en outre de 0,01 à 20 parties en masse d'un composé d'amine à empêchement stérique.

7. Article moulé en résine qui est moulé avec la composition de résine selon l'une quelconque des revendications précédentes.

8. Article moulé en résine selon la revendication 7, dans lequel ledit moulage est réalisé par moulage par injection, moulage par extrusion, moulage par coextrusion, moulage par soufflage, formage par presse, moulage par coulée ou profilage.

9. Article moulé en résine selon la revendication 7 ou la revendication 8, dans lequel l'article moulé en résine est un matériau extérieur pour automobile.

10. Utilisation du sulfure de zinc et d'un composé d'amine à empêchement stérique ayant une structure représentée par la formule générale (1) afin d'améliorer la résistance aux intempéries de la composition de résine selon l'une quelconque des revendications 1 à 5 ou de l'article moulé en résine selon l'une quelconque des revendications 7 à 9.
